(19) Europäisches Patentamt
European Patent Office
Office européen des brevets

(11) Publication number: **0 372 321 A1**

(12) # EUROPEAN PATENT APPLICATION

(21) Application number: **89121767.1**

(22) Date of filing: **24.11.89**

(51) Int. Cl.5: **C08L 71/12, C08L 25/04, C08K 5/524**

(30) Priority: **02.12.88 US 280225**

(43) Date of publication of application: **13.06.90 Bulletin 90/24**

(84) Designated Contracting States: **DE ES FR GB IT NL**

(71) Applicant: **GENERAL ELECTRIC COMPANY**
**1 River Road**
**Schenectady New York 12305(US)**

(72) Inventor: **Cox, Keith E.**
**503 Palmer Drive**
**Parkersburg West Virginia 26101(US)**
Inventor: **Muschelewicz, Kenneth J.**
**Route 1, Box 174A**
**Washington West Virginia 26181(US)**
Inventor: **McMahan, Gary E.**
**Route 1**
**Washington West Virginia 26181(US)**

(74) Representative: **Catherine, Alain**
**General Electric France Service de Propriété Industrielle 18 Rue Horace Vernet**
**F-92136 Issy-Les-Moulineaux Cedex(FR)**

(54) **Polyphenylene ether-high impact polystyrene blends.**

(57) Polymer blend compositions comprise a polyphenylene ether resin, a high impact polystyrene resin and a bis(dialkylphenyl) pentaerythritol diphosphite compound. A preferred pentaerythritol diphosphite compound comprises bis(2,4-di-tert-butylphenyl) pentaerythritol diphosphite.

EP 0 372 321 A1

# POLYPHENYLENE ETHER-HIGH IMPACT POLYSTYRENE BLENDS

## FIELD OF THE INVENTION

The present invention relates to polymer blend compositions comprising a polyphenylene ether resin and a high impact polystyrene resin. More particularly, the present invention relates to blend compositions comprising a polyphenylene ether resin, a high impact polystyrene resin and a bis(dialkylphenyl) pentaerythritol diphosphite compound, which compositions exhibit improvements in heat stability, light stability and/or color.

## BACKGROUND OF THE INVENTION

Polyphenylene ether resins are known in the art and exhibit a desirable combination of chemical, physical and electrical properties over a temperature range of more than about 650° F, extending from a brittle point of about -275° F to a heat distortion temperature of about 375° F. This combination of properties renders polyphenylene ether resins suitable for a broad range of applications. However, the usefulness of polyphenylene ether resins is limited in some applications as a consequence of rocessability, impact resistance, and chemical resistance.

As a result, polyphenylene ether resins have been blended with other polymer resins in order to improve processibility, impact resistance and chemical resistance. For example, the Cizek U.S. patent No. 3,383,435 discloses blends of polyphenylene ether and one or more styrene resins having improved properties. Additionally, the Lee U.S. patent No. 3,819,761 discloses compositions comprising a polyphenylene ether and a rubber modified polystyrene resin, which compositions provide molded articles exhibiting improvements in impact resistance, surface appearance and solvent resistance. Similarly, the Lee, Jr. U.S. patent No. 3,835,200 discloses compositions including a polyphenylene ether, a rubber styrene graft copolymer and a block copolymer of a vinyl aromatic compound and a conjugated diene, which compositions may be used to form molded articles having improved toughness without impairing the gloss or surface appearance of the articles. The Katchman U.S. patent No. 3,960,808 discloses polyphenylene ether compositions including a rubber-modified high impact styrene resin and a homopolystyrene having a number average molecular weight between 30,000 and 60,000. These compositions are disclosed as having improved surface appearance and a reduced melt viscosity which facilitates the fabrication of molded articles having complex configurations and permits the use of faster molding cycles. Similarly, the Katchman et al U.S. patent No. 3,994,856 discloses compositions including a polyphenylene ether, a high impact rubber modified polystyrene resin or a blend of a high impact rubber modified polystyrene resin and a homopolystyrene resin, and an elastomeric block copolymer of a vinyl aromatic compound and a conjugated diene.

These compositions are disclosed as having improved impact strengths and improved resistance to attack by aggressive solvents such as gasoline.

Additionally, the Sonoda U.S. patent No. 4,617,346, the Sugio et al U.S. patent No. 4,590,239 and the Yonemitsu et al U.S. patent No. 3,887,646 disclose polyphenylene ether resin compositions including rubber modified styrene polymers for improving impact resistance, heat resistance and the like. Additional polyphenylene ether and polystyrene resin blends are disclosed in the Izawa et al U.S. patent No. 3,929,931, the Haaf U.S. patent No. 4,322,507, the Kuribayashi et al U.S. patent No. 4,543,391 and the Ueda et al U.S. patent No. 4,599,380.

It is also known to include various additives in blends of polyphenylene ether resins and polystyrene resins. Suitable additives used in the prior art include various phosphorus-containing organic compounds. For example, the Lee, Jr. U.S. Patent No. 4,588,764 discloses compositions containing a polyphenylene ether resin, a supplementary polymer such as a rubber modified high impact polystyrene resin, and a bis(alkyl)pentaerythritol diphosphite compound in which the alkyl groups contain 1 to 30 carbon atoms. Lee, Jr. discloses that the compositions exhibit better processibility and color. The Granzow U.S. Patent No. 4,162,278 discloses compositions comprising polyphenylene ether resin and a rubber-modified high impact polystyrene resin, which compositions are rendered flame retardant by the use of pentaerythritol phosphonate compounds. Similarly, the Abolins et al U.S. Patent No. 4,233,199 and the Sugio et al U.S. Patent No. 4,472,546 disclose additional compositions comprising a polyphenylene ether resin, a homopolymer or copolymer of an aromatic vinyl compound such as styrene, and an organic phosphite compound selected from a group including, among others, distearyl pentaerythritol diphosphite. Abolins et al disclose

that the organic phosphite compound provides flame retardant characteristics while Sugio et al disclose that the resulting compositions exhibit good heat stability and weatherability.

On the other hand, additional hindered phenyl organic phosphite compounds as set forth in the Spivack U.S. Patents Nos. 4,180,497 and 4,180,498 and the Minagawa et al U.S. Patents Nos. 4,371,646 and 4,371,647 are also known in the art. The organic phosphite compounds disclosed in these references have conventionally been used in polyolefin compositions as demonstrated by the Valdiserri et al U.S. Patent No. 4,302,383, the York et al U.S. Patent No. 4,305,866, the Lewis U.S. Patent No. 4,403,053 and the Lewis et al U.S. Patent No. 4,413,078, and in polyester blends as demonstrated by the Horn, Jr. U.S. Patent No. 4,385,145.

As the use of polyphenylene ether resin compositions increases in various applications, continual improvements in the physical and chemical properties of such compositions is desired.

## SUMMARY OF THE INVENTION

Accordingly, it is an object of the present invention to provide polymer blend compositions which contain polyphenylene ether resin and which exhibit improved properties. More particularly, it is an object of the present invention to provide polymer blend compositions containing a polyphenylene ether resin and a high impact polystyrene resin, which compositions exhibit improved properties. It is a further object of the invention to provide compositions which exhibit improved heat stability, light stability and/or color.

These and additional objects are provided by the blend compositions according to the present invention which comprise a polyphenylene ether resin, a high impact polystyrene resin, a nd a bis(dialkylphenyl) pentaerythritol diphosphite compound. Preferred pentaerythritol diphosphite compounds include bis(2,4-dialkylphenyl pentaerythritol diphosphite compounds such as bis(2,4-di-tert-butylphenyl) pentaerythritol diphosphite. The compositions according to the present invention exhibit improved heat stability, light stability and/or color as compared with polyphenylene ether-high impact polystyrene compositions which do not include a phosphorus-containing organic compound and as compared with prior art polyphenylene ether-high impact polystyrene compositions containing other phosphorus-containing organic compounds.

These and additional objects and advantages of the present invention will be more fully understood in view of the following detailed description.

## DETAILED DESCRIPTION

The polymer blend compositions according to the present invention include a polyphenylene ether resin, a high impact polystyrene resin and a bis(dialkylphenyl) pentaerythritol diphosphite compound. The inventors of the present invention have discovered that the inclusion of the bis(dialkylphenyl) pentaerythritol diphosphite compound in the polyphenylene ether-high impact polystyrene blends provides the blends with improved heat stability, light stability and/or color as compared with various blend compositions of the prior art.

Polyphenylene ether resins adapted for use in the thermoplastic blend compositions of the present invention comprise polymers and copolymers having repeating structural units of the following general formula:

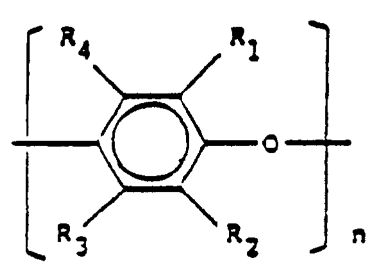

wherein $R_1$, $R_2$, $R_3$, and $R_4$ each individually represent a monovalent substituent such as hydrogen, halogen, alkyl, aryl, alkoxy and other hydrocarbon groups, with at least one of $R_1$, $R_2$, $R_3$ and $R_4$ not being hydrogen, and n represents the degree of polymerization. Preferably, n is at least 20, and more preferably, n is at least 50.

The polyphenylene ether resins suitable for use in the thermoplastic blend compositions of the present invention are well known in the art and may be prepared by any of a number of processes known in the art from corresponding phenols or reactive derivatives thereof. Examples of suitable polyphenylene ether resins and methods for their production are set forth in the Hay U.S. patents Nos. 3,306,874 and 3,306,875, and in the Yonemitsu et al U.S. Patent No. 4,011,200, all of which are incorporated herein by reference. Preferred phenylene ether resins (or PPE resins) useful for the purposes of this invention include both the homopolymers prepared by the oxidative coupling of a 2,6-dialkylphenol as disclosed for example in U.S. Patent No. 3,306,874, as well as the copolymers of 2,6-dialkylphenols and 2,3,6-trialkylphenols described in U.S. Patent No. 4,011,200. In general, these resins are prepared by oxidative coupling of a 2,6-dialkylphenol such as 2,6-dimethylphenol or a mixture of a 2,6-dialkylphenol and a 2,3,6-trialkylphenol such as 2,3,6-trimethylphenol. In forming copolymers suitable for the practice of this invention, the proportion of 2,3,6-trialkylphenol will lie in the range of from about 2 to about 50 weight percent based on total polyphenylene ether. However, the preferred copolymers will comprise from about 2 to 20 weight percent, more preferably from about 2 to about 10 weight percent 2,3,6-trialkylphenol, and, correspondingly from about 98 to about 80, more preferably from about 98 to about 90 weight percent 2,6-dialkylphenol. The synthesis of these homopolymers and copolymers by a variety of oxidative coupling processes is well known in the art, and such polymers have become available to the art from commercial sources. Throughout the Specification and Claims the term "polyphenylene ether" includes substituted polyphenylene ether and substituted polyphenylene ether copolymers, and mixtures thereof.

Preferred polyphenylene ether resins adapted for use in the thermoplastic blend compositions of the present invention also include, but are not limited to, the following polymers and copolymers thereof: poly-(2,6dimethyl-1,4-phenylene)ether; poly(2,3,6-trimethyl-1,4-phenylene) ether; poly(2,3,5,6-tetramethyl-1,4-phenylene) ether; poly(2,6-diethyl-1,4-phenylene)ether; poly(2- methyl-6-ethyl-1,4-phenylene)ether; poly(2-methyl-6-propyl-1,4-phenylene)ether; poly(2,6-dipropyl-1,4-phenylene)ether; poly(2-ethyl-6-propyl-1,4-phenylene)ether; poly(2,6-dilauryl-1,4-phenylene)ether; poly(2,6-diphenyl-1,4-phenylene)ether; poly(2,6-dimethoxy1,4 -phenylene)ether; poly(2,6-diethoxy-1,4-phenylene)ether; poly(2-methoxy-6-ethoxy-1,4-phenylene)ether; poly(2-ethyl-6-stearyloxy-1,4-phenylene)ether; poly(2,6-dichloro-1,4-phenylene)ether; poly-(2-methyl-6-phenyl-1,4-phenylene)ether; poly(2,6-dibenzyl-1,4-phenylene)ether; poly(2-ethoxy-1,4-phenylene)ether; poly(2-chloro-1,4-phenylene)ether; poly(2,6-dibromo-1,4-phenylene)ether; and the like.

The high impact polystyrene resin which is included in the polymer blend compositions according to the present invention comprises a combination of a polystyrene homopolymer or copolymer and an impact modifier. Specifically, the polystyrene homopolymer or copolymer comprises polymer units derived from a styrene monomer having the following formula:

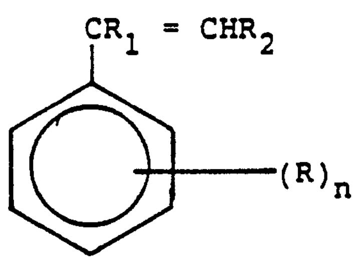

wherein $R_1$ and $R_2$ are selected from the group consisting of lower alkyl or alkenyl groups of from, for example, 1 to 6 carbon atoms and hydrogen, each R is selected from the group consisting of halogen, hydrogen and lower alkyl or alkenyl groups of from, for example, 1 to 6 carbon atoms, and n is an integer of from 0 to 5. Throughout the specification and claims the term "polystyrene homopolymer or copolymer" includes unsubstituted polystyrene homopolymer, substituted polystyrene homopolymers and substituted and unsubstituted polystyrene copolymers. For example, suitable polystyrenes include, but are not limited to, homopolymers of polystyrene, polychlorostyrene, polymethylstyrene and the like, and styrene-containing copolymers such as styrene-acrylonitrile copolymers, copolymers of ethyl vinyl benzene and divinyl benzene, styrene-acrylonitrile-methylstyrene terpolymers and the like. The methods for preparing these polystyrenes are well known in the art. The polystyrene homopolymer or copolymer which is included in the high impact polystyrene resin component generally has a weight average molecular weight, Mw, of about 250,000 or less.

The impact modifier included in the high impact polystyrene resins according to the present invention serves to improve the impact properties of the resulting blends. Impact modifiers are well known in the art and generally comprise rubber or elastomer compounds. Both natural and synthetic rubber or elastomeric

compounds are suitable for use in the high impact polystyrene resin of the present invention. Preferred impact modifiers include homopolymers or copolymers of one or more monomers such as butadiene, isoprene and ethylene-propylene diene monomers. Suitable impact modifiers for use in the present invention include, but are not limited to, hydroxy- and carboxy-terminated polybutadienes, polychlorobutadienes, copolymers of dienes such as butadiene and isoprene with various comonomers such as alkyl unsaturated esters, for example methylmethacrylate, unsaturated ketones, for example methylisopropenyl ketone, vinyl heterocyclics, for example vinyl pyridine, and the like. Other impact modifiers known in the art may also be used according to the present invention.

Preferably, the impact modifier and the polystyrene homopolymer or copolymer which are combined to form the high impact polystyrene resin included in the polymer blend compositions of the present invention are combined prior to mixing with the other composition ingredients. Additionally, the polystyrene homopolymer or copolymer and the impact modifier are preferably combined in a ratio of at least about 1:1, and more preferably 3:1, by weight to form the high impact polystyrene resin which is then blended with the polyphenylene ether and the remaining composition ingredients.

The polymer blend compositions according to the present invention further include a bis(dialkylphenyl) pentaerythritol diphosphite compound for the purpose of improving the properties of the composition, for example, the heat stability, the light stability and/or the color of the blend compositions. The alkyl substituents may individually comprise from 1 to about 12 carbon atoms, and preferably individually comprise 1 to about 6 carbon atoms. It is further preferred that the alkyl substituents are substituted in the 2 and 4 positions on each phenyl group. A particularly suitable pentaerythritol diphosphite compound comprises bis(2,4-di-tert-butylphenyl) pentaerythritol diphosphite, the use of which is demonstrated in the examples set forth below.

The blend compositions according to the present invention include the pentaerythritol diphosphite compound in an amount effective to improve the heat stability, the light stability and/or the color of the compositions. Preferably, the blend compositions comprise from about 5 to about 95 weight percent of the polyphenylene ether resin, from about 5 to about 95 weight percent of the high impact polystyrene resin, and from about 0.1 to about 10 weight percent of the pentaerythritol diphosphite compound, based on the total weights of the polyphenylene ether resin, the high impact polystyrene resin and the pentaerythritol diphosphite compound components. In a more preferred embodiment, the compositions contain from about 25 to about 75 weight percent of the polyphenylene ether resin, from about 25 to about 75 weight percent of the high impact polystyrene resin, and from about 0.5 to about 5 weight percent of the pentaerythritol diphosphite compound. Such compositions retain the advantageous properties provided by the polyphenylene ether resin and the high impact polystyrene resin while improving other properties such as heat stability, light stability and/or color as set forth above.

In another embodiment of the blend compositions of the present invention, the pentaerythritol diphosphite compound is mixed with a minor amount of an alkanolamine compound in order to prevent hydrolysis of the pentaerythritol diphosphite compound by moisture. For example, the pentaerythritol diphosphite compound may be mixed with not greater than about 5 weight percent of the alkanolamine compound, based on the weight of the pentaerythritol diphosphite compound. A preferred alkanolamine comprises triisopropanolamine.

The blend compositions according to the invention may also include a further impact modifier component. Preferred impact modifiers comprise rubbery high molecular weight polymers. Rubbery high molecular weight polymers may comprise natural and/or synthetic polymeric materials. More particularly, the rubbery high molecular weight polymer materials may comprise natural rubber, thermoplastic elastomers, homopolymers and copolymers, including random, block and graft copolymers which are well-known in the art. Specific examples of the rubbery high molecular weight polymer materials include, but are not limited to, natural rubber, butadiene polymers, additional rubbery styrene copolymers, butadiene/styrene copolymers, isoprene polymers, chlorobutadiene polymers, butadiene/acrylonitrile copolymers, isobutylene polymers, isobutylene/butadiene copolymers, isobutylene/isoprene copolymers, acrylic ester polymers, ethylene/propylene copolymers, ethylene/propylene/diene copolymers, thiokol rubber, polysulfide rubber, polyurethane rubber, and epichlorohydric rubber. Additionally, any of the aforementioned rubbery materials may be modified with an acid or anhydride as is known in the art for use in the blend compositions of the present invention.

Preferred impact modifiers comprise AB and ABA type block copolymers comprising vinyl aromatic blocks and hydrogenated, partially hydrogenated, and non-hydrogenated conjugated diene blocks. Examples of suitable block copolymers are polystyrene-polybutadiene, polystyrene-polyisoprene, polystyrene-polybutadiene-polystyrene, polystyrene-polyisoprene-polystyrene, poly(alpha-methylstyrene)-polybutadiene, poly(alpha-methylstyrene)-polyisoprene, poly(alpha-methylstyrene)-polybutadiene-poly(alpha-methylstyrene), and poly(alpha-methylstyrene)-polyisoprene-poly(alpha-methylstyrene).

The impact modifier may be included in the thermoplastic blend compositions according to the present invention in an amount of from about 1 to about 50 weight percent and, preferably in an amount of from about 5 to about 25 weight percent.

Additionally, the polymer blend compositions according to the present invention may further include various conventional additives which are known in the art, for example, flame retardants, antioxidants, colorants, processing aids, fillers and the like which are well known in the art.

The blend compositions of the invention may be prepared by various polymer blending techniques which are well known in the art. For example, the blend compositions may be prepared by melt-mixing, heat-extrusion and the like. The pentaerythritol diphosphite compound may be added to either of the polyphenylene ether resin or high impact polystyrene resin components prior to blending the resin components or may be added to the blended resins. Remaining ingredients such as impact modifiers, additives, fillers and the like as set forth above may be added directly to the blend compositions or to one of the polyphenylene ether and high impact polystyrene resin components prior to blending with the other.

The blend compositions are further demonstrated by the following examples in which parts and percentages are by weight unless otherwise specified.

EXAMPLE 1

This example demonstrates polymer blend compositions according to the present invention, polymer compositions of the prior art, and their comparative properties. More particularly, compositions 1D-1G were prepared according to the present invention comprising a polyphenylene ether resin (PPE), a high impact polystyrene resin (HIPS1) comprising Mobil 5400 and a bis(2,4-di-tert-butylphenyl) pentaerythritol phosphite comprising Ultranox 626 supplied by Borg Warner Chemicals, Inc. Ultranox 626 includes 1 weight percent triisopropanolamine. Compositions 1E-1G also included a hindered phenolic antioxidant comprising butylated hydroxytoluene (BHT). Comparative Compositions 1A-1C were also prepared. Composition 1A contained a conventional phosphite additive comprising trinonylphenyl phosphite (TNPP) and BHT. Comparative Composition 1B contained neither a phosphite compound nor BHT. Composition 1C contained BHT but did not contain a phosphite compound. All of Compositions 1A-1G included an impact modifier comprising a styrene-butadiene-styrene block copolymer (Kraton G-1650 supplied by Shell) and a small amount of a lubricant (F-88). The parts by weight of each component included in Compositions 1A-1G are set forth in Table I. The compositions were prepared on a 30mm Leistritz twin screw extruder in which the temperature of zone 1 was 150 °C and the temperatures of zones 2-10 were 290 °C, using a speed of 300rpm, a feeder setting of 750, 19.5 to 21.0 drive amps and a stock temperature indicator of 600 to 605 °F. Samples of each composition were molded using a 3oz, 110 ton Van Dorn injection molding machine using cylinder and nozzle temperatures of 500 °F and a mold temperature of 180 °F.

TABLE I

| | 1A | 1B | 1C | 1D | 1E | 1F | 1G |
|---|---|---|---|---|---|---|---|
| PPE | 37 | 37 | 37 | 37 | 37 | 37 | 37 |
| HIPS1 | 57 | 57 | 57 | 57 | 57 | 57 | 57 |
| Ultranox 626 | --- | --- | --- | 1.0 | 0.5 | 0.6 | 0.4 |
| Kraton G-1650 | 6 | 6 | 6 | 6 | 6 | 6 | 6 |
| F-88 | 0.5 | 0.5 | 0.5 | 0.5 | 0.5 | 0.5 | 0.5 |
| TNPP | 0.4 | --- | --- | --- | --- | --- | --- |
| BHT | 0.6 | --- | 1.0 | --- | 0.5 | 0.4 | 0.6 |

Samples of Compositions 1A-1G were then subjected to measurement of oxidative thermal stability as indicated by the temperature at which onset of an exotherm occurred, and to measurement of various physical properties including Notched Izod impact (room temperature, 1/8 inch sample, ASTM D-256-87), shrinkage and Dynatup instrumental impact strengths. The oxidative thermal stability was measured by determining the exotherm by differential thermal analysis using a Differential Scanning Colorimeter (DSC) cell. Samples were tested from ambient temperature at a heating rate of 20 °C/min in an air atmosphere of 50 ml/min until a major exotherm occurred. The exotherm was extrapolated and reported to the nearest °C.

The shrinkage measurements were carried out in an air circulating oven for two hours at 350° F. The Dynatup impact of three different samples of each composition was measured, the first sample comprising an unaged sample measured at room temperature, the second sample comprising a sample which had been aged at four hours at 250° C and measured at room temperature, and an unaged sample measured at -40° F. The Dynatup instrumental impact strength of a sample was measured using a Model 8000a unit which meets or exceeds all ASTM D-3763-85 standards. The test sample comprised a 4" diameter disk and the test velocity was approximately 8 ft/sec. The results of these measurements are set forth in Table II.

TABLE II

| | 1A | 1B | 1C | 1D | 1E | 1F | 1G |
|---|---|---|---|---|---|---|---|
| Onset of Exotherm (° C) | 223 | 220 | 229 | 254 | 246 | 247 | 242 |
| Notched Izod Impact, (ft-lb/in) | 7.3 | 7.2 | 7.6 | 7.0 | 7.2 | 7.2 | 7.6 |
| Shrinkage (%) | 36 | 34 | 36 | 34 | 34 | 34 | 34 |
| Dynatup, Room Temperature, Unaged (ft-lb) | | | | | | | |
| Fail Point Avg. | 37.96 | 37.59 | 35.85 | 36.81 | 37.13 | 40.13 | 36.30 |
| St. Dev. | 1.23 | 2.96 | 4.96 | 1.88 | 2.77 | 0.79 | 5.26 |
| Ductile of five | 5 | 5 | 5 | 5 | 5 | 5 | 5 |
| Dynatup, Room Temperature, Aged 4 hrs. at 250° C (ft-lb) | | | | | | | |
| Fail Point Avg. | 39.80 | 35.24 | 36.80 | 34.01 | 35.43 | 38.56 | 39.45 |
| St. Dev. | 0.77 | 5.53 | 3.18 | 1.70 | 5.33 | 3.43 | 1.91 |
| Ductile of five | 5 | 5 | 5 | 5 | 5 | 5 | 5 |
| Dynatup, -40° F, Unaged (ft-lb) | | | | | | | |
| Fail Point Avg. | 15.42 | 25.06 | 26.36 | 24.46 | 15.67 | 33.76 | 34.99 |
| St. Dev. | 14.90 | 14.74 | 14.92 | 4.62 | 10.16 | 5.54 | 14.29 |
| Ductile of four | 1 | 3 | 3 | 4 | 1 | 4 | 4 |

The results set forth in Table II indicate that the Compositions 1D-1G according to the present invention exhibited improved oxidative thermal stability as demonstrated by the onset temperature of the exotherm as compared with both Compositions 1B and 1C which did not include a phosphorus containing organic compound and as compared with Composition 1A which included the conventional trinonylphenyl phosphite. The improvements in oxidative thermal stability indicate that the compositions according to the present invention will exhibit improved long term aging. Additionally, Compositions 1D-1G exhibited similar impact and shrinkage properties as compared with Comparative Compositions 1A-1C. Thus, the compositions according to the present invention exhibited improved thermal stability while maintaining the advantageous impact properties of the compositions.

Samples of Compositions 1A-1G were also subjected to colorimeter measurements using macBeth color analysis techniques. The colorimeter measurements were conducted on a first set of unaged samples, on a second set of samples which were aged at 250° C for four hours, and on a third set of samples which were aged at 350° C for two hours. The results of these measurements are set forth in Table III.

TABLE III

| | 1A | 1B | 1C | 1D | 1E | 1F | 1G |
|---|---|---|---|---|---|---|---|
| Unaged Samples | | | | | | | |
| L* | 76.05 | 74.04 | 73.92 | 79.93 | 78.04 | 78.20 | 77.59 |
| a* | 2.92 | 3.59 | 3.35 | 1.86 | 2.34 | 2.41 | 2.53 |
| b* | 21.65 | 21.20 | 20.81 | 23.27 | 22.57 | 22.90 | 22.60 |
| DL* | ----- | -2.01 | -2.13 | 3.88 | 1.99 | 2.15 | 1.54 |
| DE* | ----- | 2.17 | 2.33 | 4.34 | 2.27 | 2.54 | 1.85 |
| Samples Aged at 250° C for 4 hours | | | | | | | |
| L* | 73.60 | 71.26 | 70.51 | 78.45 | 75.57 | 75.74 | 74.59 |
| a* | 3.83 | 4.63 | 4.33 | 2.94 | 3.38 | 3.45 | 3.60 |
| b* | 18.85 | 18.91 | 17.49 | 21.24 | 19.63 | 20.07 | 19.42 |
| DL* | ----- | -2.34 | -3.09 | 4.85 | 1.97 | 2.14 | 0.99 |
| DE* | ----- | 2.47 | 3.41 | 5.48 | 2.17 | 2.49 | 1.17 |
| Samples Aged at 350° C for 2 hours | | | | | | | |
| L* | 66.20 | 66.22 | 61.34 | 73.65 | 67.99 | 69.02 | 67.62 |
| a* | 6.54 | 7.63 | 7.31 | 6.38 | 6.77 | 7.22 | 6.94 |
| b* | 21.64 | 28.14 | 21.25 | 27.92 | 22.82 | 24.63 | 22.80 |
| DL* | ----- | 0.02 | -4.86 | 7.45 | 1.79 | 2.82 | 1.42 |
| DE* | ----- | 6.59 | 4.94 | 9.75 | 2.16 | 4.17 | 1.88 |

The results set forth in Table III demonstrate that the Compositions 1D-1G according to the present invention generally exhibit improvements in colcr as compared with the Comparative Compositions 1A-1C.

EXAMPLE 2

In this example, Composition 2C according to the present invention was prepared comprising polyphenylene ether resin (PPE), high impact polystyrene resin (HIPS1) and a bis(dialkyphenyl) pentaerythritol diphosphite compound, Ultranox 626 comprising bis(2,4-di-tert-butylphenyl) pentaerythritol phosphite. Comparative Compositions 2A and 2B were also prepared. Comparative Composition 2A did not include a phosphorus-containing compound while Comparative Composition 2B included TNPP and BHT. The parts by weight of the components of Compositions 2A-2C are set forth in Table IV. The compositions were prepared in a multiple pass extrusion technique using the extrusion apparatus described in Example 1. After each pass, samples of the compositions were subjected to measurement of the onset of the exotherm, the notched Izod impact strength (1/8 inch sample, room temperature), and the shrinkage according to the methods described in Example 1. The melt viscosity at 550° F, 500sec$^{-1}$ of each sample was also determined according to ASTM D-3835-79. The results of these measurements are also set forth in Table IV.

TABLE IV

| | 2A | 2B | 2C |
|---|---|---|---|
| PPE | 37 | 37 | 37 |
| HIPS1 | 57 | 57 | 57 |
| Ultranox 626 | --- | --- | 1.0 |
| Kraton G-1650 | 6 | 6 | 6 |
| F-88 | 0.5 | 0.5 | 0.5 |
| TNPP | --- | 0.4 | --- |
| BHT | --- | 0.6 | --- |
| Onset of Exotherm (°C) | | | |
| Pass 1 | 224 | 236 | 256 |
| Pass 2 | --- | --- | 247 |
| Pass 3 | --- | --- | 238 |
| Pass 4 | --- | --- | 235 |
| Notched Izod Impact (ft-lb/in) | | | |
| Pass 1 | 6.6 | 6.5 | 6.1 |
| Pass 2 | 5.4 | 5.7 | 5.2 |
| Pass 3 | 3.8 | 4.5 | 3.7 |
| Pass 4 | 2.7 | 3.4 | 2.8 |
| Shrinkage (%) | | | |
| Pass 1 | 27.5 | 29.4 | 29.4 |
| Pass 2 | 27.5 | 27.5 | 29.4 |
| Pass 3 | 23.5 | 27.5 | 26.5 |
| Pass 4 | 25.5 | 27.5 | 27.5 |
| Melt Viscosity, 550°F, 500$sec^{-1}$ (poise) | | | |
| Pass 1 | 3959 | 3541 | 3607 |
| Pass 2 | 3501 | 3354 | 3329 |
| Pass 3 | 3223 | 3225 | 3252 |
| Pass 4 | 3075 | 3073 | 3135 |

The results set forth in Table IV further demonstrate the improved oxidative thermal stability of the Composition 2C according to the present invention as compared with Composition 2A containing no phosphite compound and Composition 2B containing the conventional trinonylphenyl phosphite. The results set forth in Table IV further demonstrate that the compositions according to the present invention also maintain the advantageous impact properties of polyphenylene ether-high impact polystyrene blend compositions.

Blend compositions 2A-2C of this example were also subjected to colorimeter readings after each extrusion pass according to the general technique set forth in Example 1. The colorimeter measurement results are set forth in Table V and demonstrate that the compositions according to the present invention further exhibit generally improved color as compared with Comparative Examples 2A and 2B.

TABLE V

| | 2A | 2B | 2C |
|---|---|---|---|
| Color Shift after Pass 1 | | | |
| L* | 70.02 | 72.14 | 74.99 |
| a* | 0.11 | -0.74 | -2.63 |
| b* | 17.44 | 17.73 | 16.95 |
| DL* | ----- | 2.12 | 4.97 |
| DE* | ----- | 2.30 | 5.70 |
| Color Shift after Pass 2 | | | |
| L* | 69.71 | 71.15 | 74.82 |
| a* | 0.46 | -0.29 | -2.62 |
| b* | 17.25 | 17.25 | 16.74 |
| Color Shift after Pass 3 | | | |
| L* | 69.16 | 70.52 | 74.04 |
| a* | 0.67 | 0.08 | -2.33 |
| b* | 17.05 | 16.93 | 15.91 |
| Color Shift after Pass 4 | | | |
| L* | 68.57 | 69.67 | 72.40 |
| a* | 0.78 | 0.25 | -1.78 |
| b* | 16.45 | 16.93 | 14.77 |

EXAMPLE 3

In this example, Compositions 3B-3D were prepared according to the present invention containing a polyphenylene ether resin (PPE), a high impact polystyrene resin (HIPS 2) comprising Mobil 4154 and a bis(dialkylphenyl) pentaerythritol diphosphite, Ultranox 626 comprising bis(2,4-di-tert-butylphenyl) pentaerythritol diphosphite. Composition 3D also contained a small amount of a primary antioxidant (Goodrite 3114) comprising 1,3,5-tris(3,5-di-tert-butyl-4-hydroxybenzyl) isocyanurate. Comparative Composition 3A was prepared including BHT and TNPP. The parts by weight of the components of Compositions 3A-3D are set forth in Table VI. The oxidative thermal stability of a sample of each of these compositions was determined by measuring the onset of the exotherm. Additionally, the notched Izod impact (1/8 inch sample, room temperature) of unaged samples of each composition and samples of each composition, aged at 115°C for various time periods, were measured. The general methods described in Example 1 were employed. The results of these measurements are also set forth in Table VI.

TABLE VI

| | 3A | 3B | 3C | 3D |
|---|---|---|---|---|
| PPE | 34 | 34 | 34 | 34 |
| HIPS2 | 63 | 63 | 63 | 63 |
| Ultranox 626 | --- | 0.33 | 1.0 | 0.2 |
| Kraton G-1650 | 3 | 3 | 3 | 3 |
| F-88 | .5 | .5 | .5 | .5 |
| BHT | .6 | --- | --- | --- |
| TNPP | .4 | --- | --- | --- |
| Goodrite 3114 | --- | --- | --- | .1 |
| Onset of Exotherm (C°) | 230 | 232 | 246 | 233 |
| Notched Izod Impact (ft-lb/in) | | | | |
| Unaged Sample | 3.6 | 3.6 | 3.9 | 4.2 |
| Aged Sample, 25 hrs | 3.3 | 3.6 | 3.7 | --- |
| 101 hrs | 2.8 | 3.3 | 3.4 | 3.3 |
| 150 hrs | 2.6 | 2.8 | 3.0 | --- |
| 263 hrs | 1.4 | 2.2 | 2.9 | 2.1 |

The results set forth in Table VI further demonstrate that Compositions 3B-3D according to the present invention exhibit improved thermal stability as compared with the Comparative Composition 3A. Additionally, Composition 3C according to the present invention containing the greater amount of pentaerythritol diphosphite compound exhibited improved thermal stability as compared with Compositions 3B and 3D according to the present invention but containing smaller amounts of the pentaerythritol diphosphite compound. The notched Izod impact measurements also demonstrate that the compositions according to the present invention exhibited equivalent or higher impact strengths as compared with the Comparative Composition 3A.

EXAMPLE 4

In this example, Compositions 4B and 4D were prepared according to the present invention containing a polyphenylene ether resin (PPE), a high impact polystyrene resin (HIPS1 or HIPS2) and a bis(dialkylphenyl) pentaerythritol diphosphite compound, Ultranox 626 comprising bis(2,4-di-tert-butylphenyl) pentaertythritol diphosphite. Comparative Compositions 4A and 4C were prepared in which the bis(dialkylphenyl) pentaertythritol diphosphite according to the present invention was replaced with Weston 619 supplied by Borg Warner Chemicals, Inc. which comprises distearyl pentaerythritol diphosphite. The parts by weight of the components of Compositions 4A-4D of this example are set forth in Table VII. The compositions were prepared using the multiple pass extrusion tecnique described in Example 2. These compositions were subjected to a study of their oxidative thermal stability as determined by measurement of the onset of exotherm. Samples of these compositions were also subjected to notched Izod impact measurement (room temperature, 1/8 inch sample). Both unaged samples and samples which had been aged at 150°C for varying time periods were subjected to impact measurement. The methods described in Example 1 were employed and the results of these measurements are also set forth in Table VII.

TABLE VII

| | 4A | 4B | 4C | 4D |
|---|---|---|---|---|
| PPE | 37 | 37 | 34 | 34 |
| HIPS1 | 57 | 57 | --- | --- |
| HIPS2 | --- | --- | 63 | 63 |
| Ultranox 626 | --- | 1.0 | --- | 1.0 |
| Kraton G-1650 | 6 | 6 | 3 | 3 |
| F-88 | 0.5 | 0.5 | 0.5 | 0.5 |
| Weston 618 | 1.0 | --- | 1.0 | --- |
| Onset of Exotherm (°C) | | | | |
| First Pass | 222 | 238 | 221 | 243 |
| Second Pass | 214 | 224 | 214 | 221 |
| Third Pass | 315 | 224 | 214 | 219 |
| Fourth Pass | 216 | 222 | 213 | 219 |
| Notched Izod Impact (ft-lb/in) | | | | |
| Unaged | 6.3 | 6.5 | 5.6 | 5.9 |
| Aged, 25 hrs | 3.5 | 4.9 | 5.5 | 5.5 |
| 51 hrs | 3.4 | 4.7 | 5.2 | 5.4 |
| 100 hrs | 3.2 | 4.2 | 4.9 | 5.0 |
| 170 hrs | 2.9 | 4.0 | 4.4 | 4.4 |
| 250 hrs | 2.8 | 3.6 | 4.2 | 4.2 |

The results set forth in Table VII indicate that Compositions 4B and 4D according to the present invention exhibited improved thermal stability as compared with Compositions 4A and 4C after each pass of the multi-extrusion process. Additionally, the compositions according to the present invention exhibited similar or improved notched Izod impact strengths as compared with Comparative Compositions 4A and 4C. This indicates that the compositions according to the present invention retain the advantageous properties of the polyphenylene ether and high impact polystyrene components while improving the thermal stability properties.

The preceding examples are set forth to illustrate specific embodiments of the invention and are not intended to limit the scope of the compositions of the present invention. Additional embodiments and advantages within the scope of the claimed invention will be apparent to one of ordinary skill in the art.

## Claims

1. A polymer blend composition, comprising
(a) a polyphenylene ether resin;
(b) a high impact polystyrene resin; and
(c) a bis(dialkylphenyl) pentaerythritol diphosphite compound.

2. A polymer composition as defined by claim 1, wherein the pentaerythritol diphosphite compound is included in an amount effective to improve the heat stability of the composition.

3. A polymer composition as defined by claim 1, comprising
(a) from about 5 to about 95 weight percent of the polyphenylene ether resin;
(b) from about 5 to about 95 weight percent of the high impact polystyrene resin; and
(c) from about 0.1 to about 10 weight percent of the pentaerythritol diphosphite compound, based on the polyphenylene ether resin, high impact polystyrene resin and pentaerythritol diphosphite compound components.

4. A polymer composition as defined by claim 3, comprising
(a) from about 25 to about 75 weight percent of the polyphenylene ether resin;
(b) from about 25 to about 75 weight percent of the high impact polystyrene resin; and
(c) from about 0.5 to about 5 weight percent of the pentaerythritol diphcsphite compound, based on the polyphenylene ether resin, high impact polystyrene resin and pentaerythritol diphosphite compound components.

5. A polymer composition as defined by claim 1, wherein the polyphenylene ether resin comprises a

copolymer of a 2,6-dialkylphenol and a 2,3,6-trialkylphenol.

6. A polymer composition as defined by claim 5, wherein the polyphenylene ether resin comprises a copolymer of 2,6-dimethylphenol and 2,3,6-trimethylphenol.

7. A polymer composition as defined by claim 6, wherein the polyphenylene ether copolymer comprises from about 80 to about 98 weight percent 2,6-dimethylphenol and from about 2 to about 20 weight percent 2,3,6-trimethylphenol, based on the dimethylphenol and the trimethylphenol.

8. A polymer composition as defined by claim 1, wherein the high impact polystyrene resin comprises a polystyrene homopolymer or copolymer and a synthetic or natural rubber impact modifying component.

9. A polymer composition as defined by claim 8, wherein the high impact polystyrene resin comprises the polystyrene homopolymer or copolymer and the rubber impact modifying component in a weight ratio of at least about 1:1.

10. A polymer composition as defined by claim 9, wherein the high impact polystyrene resin comprises the polystyrene homopolymer or copolymer and the rubber impact modifying component in a weight ratio of at least about 3:1.

11. A polymer composition as defined by claim 1, wherein the pentaerythritol diphosphite compound comprises a bis(2,4-dialkyphenyl) pentaerythritol diphosphite.

12. A polymer composition as defined by claim 11, wherein the pentaerythritol diphosphite compound comprises bis(2,4-di-tert-butylphenyl) pentaerythritol diphosphite.

13. A polymer composition as defined by claim 1, wherein the pentaerythritol diphosphite compound is mixed with a minor amount of an alkanolamine.

14. A polymer composition as defined by claim 13, wherein the pentaerythritol diphosphite compound is mixed with not greater than about 5 weight percent of the alkanolamine, based on the weight of the pentaertythritol diphosphite compound.

15. A polymer composition as defined by claim 13, wherein the alkanolamine comprises triisopropanolamine.

16. A polymer composition as defined by claim 1, further including an impact modifier component.

17. A polymer composition as defined by claim 16, wherein the impact modifier comprises a triblock polymer A-B-A′ where A and A′ comprise vinyl aromatic polymer units and B comprises conjugated diene polymer units.

18. A polymer composition as defined by claim 17, wherein the impact modifier comprises a styrene-butadiene-styrene block polymer.

19. A polymer composition as defined by claim 18, wherein the impact modifier comprises an at least partially hydrogenated styrene-butadiene-styrene block polymer.

20. A polymer blend composition, comprising

(a) from about 5 to about 95 weight percent of a polyphenylene ether resin comprising a copolymer of 2,6-dimethylphenol and 2,3,6-trimethylphenol;

(b) from about 5 to about 95 weight percent of a high impact polystyrene resin; and

(c) from about 0.1 to about 10 weight percent of a mixture comprising bis(2,4-di-tert- butylphenyl) pentaerythritol diphosphite and triisopropanolamine;

the weight percentages of components (a), (b) and (c) being based on the total weight of components (a), (b) and (c), and the triisopropanolamine being included in an amount not greater than about 5 weight percent based on the pentaerythritol diphosphite.

European Patent Office

# EUROPEAN SEARCH REPORT

Application number

EP 89121767.1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP - B1 - 0 038 876 (ADEKA ARGUS CHEMICAL CO., LTD.) * Claims; page 3, lines 44-49; page 16, lines 25-30 * -- | 1-4, 11,12, 20 | C 08 L 71/12<br>C 08 L 25/04<br>C 08 K 5/524 |
| X | EP - A2 - 0 192 154 (BASF AKTIENGESELLSCHAFT) * Claims; page 4, lines 17,18; page 5, lines 8-27; page 7, lines 17-22; page 10, lines 4-21 * -- | 1-11, 16 | |
| D,A | US - A - 4 588 764 (LEE, JR.) * Claims; column 1, line 55 - column 2, line 21; column 3, lines 28-34; column 4, lines 14-33 * ---- | 1-10, 16-20 | |

TECHNICAL FIELDS SEARCHED (Int Cl.5)

C 08 L 71/00
C 08 L 25/00
C 08 K

The present search report has been drawn up for all claims

| Place of search | Date of completion of the search | Examiner |
|---|---|---|
| VIENNA | 20-02-1990 | WEIGERSTORFER |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82